# DEMANDE DE BREVET EUROPEEN

(11) **EP 0 857 949 A1**
(43) Date de publication de la demande: **12.08.1998**
(21) Numéro de dépôt: 98440015.0
(22) Date de dépôt: 05.02.1998
(51) Int. Cl.: G01D 5/244

(54) **Système de diagnostic du fonctionnement d'un capteur d'angle**

(30) Priorité: 07.02.1997 FR 9701591
(71) Demandeur: EATON CORPORATION, Cleveland Ohio 44114 (US)
(72) Inventeur: Corbier, Jean-Paul, 06240 Beausoleil (FR)
(74) Mandataire: Littolff, Denis

(57) **Abrégé**

Système de diagnostic du fonctionnement d'un capteur d'angle (C) fournissant la mesure de l'angle d'un organe en rotation (2) sous forme d'au moins deux signaux logiques (A, B) à deux états traités par un étage électronique les codant par sommation pondérée des tensions de manière à créer un signal analogique dont la tension est toujours supérieure à un seuil prédéterminé en fonctionnement normal du capteur (C), de façon à transmettre la valeur de l'angle mesuré sur une unique connexion électrique (S) reliant la sortie du capteur (C) à un organe utilisateur (U) du type calculateur, ladite connexion (S) étant également utilisée par l'organe utilisateur (U) pour envoyer un signal de demande de diagnostic du fonctionnement du capteur (C), et pour transmettre l'information en réponse entre le capteur (C) et l'organe utilisateur (U), caractérisé en ce qu'il comporte:
- des moyens électroniques pour abaisser la tension du signal de sortie du capteur (C) sous ledit seuil prédéterminé en réponse à une demande de diagnostic émise par l'organe utilisateur (U) ; et
- des moyens électroniques de détection de l'abaissement dudit signal de sortie du capteur (C), reliés à des moyens électroniques de forcer les signaux logiques à deux états, chacun à une valeur telle que le signal de sortie résultant est déterminé et contrôlable par l'organe utilisateur (U).

## Description

La présente invention concerne d'une part un système de diagnostic du fonctionnement d'un capteur d'angle fournissant la mesure de l'angle d'un organe en rotation, et d'autre part un procédé pour l'établissement d'un tel diagnostic.

Les capteurs d'angles concernés par l'invention sont connus, et permettent la mesure de l'angle parcouru par l'organe rotatif au moyen d'impulsions électriques envoyées vers un calculateur apte à utiliser cette information, éventuellement après un premier traitement électronique visant à coder analogiquement le signal. De tels capteurs sont par exemple utilisés dans des colonnes de direction de véhicules automobiles, et transmettent au calculateur du véhicule la position angulaire du volant par rapport à une position arbitraire.

Pour faciliter la compréhension, on va rester dans la suite de la description sur cet exemple, en expliquant une configuration possible, bien que l'invention ne soit évidemment pas restreinte à cette configuration.

Dans ce genre de capteurs, on mesure la vitesse et le sens de rotation au moyen de deux éléments sensibles, souvent configurés en fourches optiques, associées par exemple à une roue à encoches. Chaque élément sensible comporte un émetteur et un récepteur de lumière, placés de part et d'autre de la roue à encoches, dans l'axe l'un de l'autre. Le faisceau lumineux est alternativement continu et interrompu, selon que le couple émetteur - récepteur est respectivement en face d'une encoche ou d'un secteur angulaire plein de la roue. La rotation de l'arbre entraîne par conséquent la génération d'impulsions en sortie de l'émetteur, formant un signal de type numérique.

Les deux éléments sensibles sont disposés de telle sorte que les signaux générés soient décalés d'un quart de période électrique (Π/2), ce qui permet de déduire, outre la vitesse, le sens de rotation de l'arbre tournant. L'information constituée desdits signaux est envoyée vers un organe de traitement qui l'utilise en fonction des tâches qui lui ont été assignées : dans le cas d'une colonne de direction, la fonction d'un tel calculateur est principalement de calculer l'angle de rotation du volant.

Pour des raisons d'économie et de fiabilité, les signaux issus des éléments sensibles sont souvent véhiculés sur un seul fil, à destination de l'unité de traitement. Les deux signaux numériques subissent alors un codage, par exemple un codage pondéré de leurs tensions respectives, de manière à obtenir un signal de sortie analogique facile à décoder. La reconstitution des signaux de départ se fait alors très simplement par comparaison du signal unique avec des seuils prédéterminés, souvent au niveau du calculateur.

Cependant, il n'y a variation des niveaux de tension que si l'arbre tourne d'un certain angle, appelé angle mort. Ce dernier est égal au quart de la période de la configuration géométrique de la roue à encoches. En général, il n'est pas considéré comme gênant car il est petit, et parce que les applications en tiennent compte.

Toutefois, en cas de défaillance d'un des maillons du dispositif précité (émetteur, récepteur, circuit électronique de codage ou de traitement, liaison électrique ...), le calculateur peut être induit en erreur par l'absence de variation du signal en sortie du capteur. Ladite absence de modifications le conduit à déduire que l'arbre rotatif ne tourne plus, ou tourne d'un angle inférieur à l'angle mort.

C'est pourquoi il peut s'avérer intéressant de tester l'installation, et de diagnostiquer l'état réel du capteur, afin de mettre en place en cas de besoin une stratégie de fonctionnement adaptée.

Il existe déjà des capteurs dotés de systèmes de diagnostic capables de procéder à des tests sur demande du calculateur central de traitement. Les montages utilisés sont cependant souvent onéreux, car ils multiplient les connexions électriques : un ou deux fils pour transporter l'information d'angle, un fil pour véhiculer la demande de diagnostic et un fil pour envoyer la réponse à l'unité centrale.

D'autres solutions existantes n'utilisent qu'un seul fil pour la transmission de toutes ces informations, mais elles exigent un multiplexage des signaux et sont par conséquent plus complexes et également chères. Le prix de revient de ces solutions les rend inadaptées aux applications grand public telles que l'automobile, où les prix doivent être maintenus aussi bas que possible. L'application précitée aux volants de direction d'automobiles est en particulier hors du champ d'utilisation de ces solutions.

La présente invention remédie à ces problèmes.

L'objectif principal de l'invention est de permettre l'installation d'un système de diagnostic sur un capteur standard sans élever les coûts de manière significative.

En d'autres termes, le système préconisé par l'invention est simple à mettre en oeuvre, avec des composants standards en nombre peu élevés.

Il ne nécessite en outre qu'une modification mineure des capteurs traditionnels tels qu'ils sont conçus actuellement.

L'information est pourtant véhiculée sur une unique connexion, sans qu'il soit pour autant nécessaire de recourir à une solution électronique sophistiquée.

Plus précisément, l'objet de l'invention est un système de diagnostic du fonctionnement d'un capteur d'angle fournissant la mesure de l'angle d'un organe en rotation sous forme d'au moins deux signaux logiques à deux états traités par un étage électronique les codant par sommation pondérée des tensions, fournissant un signal analogique dont la tension est toujours supérieure à un seuil prédéterminé en fonctionnement normal du capteur. Ceci permet de transmettre la valeur de l'angle mesuré sur une unique connexion électrique reliant la sortie du capteur à un organe utilisateur du type calculateur, ladite connexion étant également utilisée par l'organe utilisateur pour envoyer un signal de demande de diagnostic du fonctionnement du capteur, et pour transmettre l'information en réponse entre le capteur et l'organe utilisateur. Le système de l'invention est principalement caractérisé en ce qu'il comporte :
- des moyens électroniques pour abaisser la tension du signal de sortie du capteur sous ledit seuil prédéterminé en réponse à une demande de diagnostic émise par l'organe utilisateur ; et
- des moyens électroniques de détection de l'abaissement dudit signal de sortie du capteur, reliés à des moyens électroniques de forcer les signaux logiques à deux états chacun à une valeur telle que le signal de sortie résultant est déterminé et contrôlable par l'organe utilisateur.

De préférence, les moyens électroniques pour abaisser la tension du signal de sortie du capteur sous ledit seuil de tension prédéterminé sont constitués par un transistor dont la base est reliée à l'organe utilisateur qui y envoie l'impulsion de demande de diagnostic, dont le collecteur est relié à la sortie du capteur, et dont l'émetteur est connecté à la masse.

De même, les moyens électroniques de détection de l'abaissement de la tension en sortie du capteur sont constitués d'un amplificateur opérationnel monté en comparateur de tension, dont l'entrée négative est reliée à ladite sortie du capteur alors que l'entrée positive est reliée à un pont de résistance calibrant son seuil de changement d'état en sortie, laquelle est reliée aux moyens électroniques de forcer les signaux logiques à deux états à des valeurs prédéterminées.

L'invention s'applique par exemple lorsque lesdits signaux logiques à deux états sont obtenus au moyen de couples émetteurs récepteurs optiques dont les émetteurs émettent de la lumière lorsqu'ils sont sous tension, ladite lumière étant captée par les récepteurs selon la position en rotation de l'organe rotatif.

Selon une configuration préférentielle, les couples émetteurs - récepteurs sont constitués de diodes électroluminescentes et de phototransistors émettant des signaux logiques numériques à deux états.

Dans ce cas, les moyens électroniques pour forcer lesdits signaux logiques à deux états à des valeurs prédéterminées consistent en un comparateur dont la sortie à collecteur ouvert change d'état et passe à l'état haut lorsque les moyens de détection signalent une demande de diagnostic, ladite sortie étant reliée auxdits émetteurs dont l'autre pôle est à la tension d'alimentation, alors que l'entrée positive dudit comparateur est reliée à la sortie des moyens de détection, l'entrée négative étant reliée à un pont de résistance calibrant sont seuil de changement d'état.

Selon une conception particulière de l'invention, l'entrée positive du comparateur change d'état par chargement d'un condensateur relié à la sortie des moyens de détection via une diode en parallèle avec une résistance, la décharge dudit condensateur déterminant la durée de maintient à l'état haut de la sortie du comparateur.

Les caractéristiques de l'invention permettent bien de véhiculer sur une ligne unique les informations relatives aux éléments sensibles proprement dits, à la demande de diagnostic émise par le calculateur central et à la réponse renvoyée par le capteur.

La conception utilisée est cependant simple et judicieuse, faisant appel à des circuits électroniques élémentaires nécessitant quelques composants standards.

Le coût total d'un tel système reste au surplus tout à fait compatible avec les exigences économiques du domaine de l'automobile, et plus généralement des applications grand public.

La présente invention concerne également un procédé d'établissement de diagnostic mis en oeuvre par le système décrit auparavant.

Il s'agit d'un procédé d'établissement de diagnostic de fonctionnement d'un capteur d'angle fournissant la mesure de l'angle d'un organe en rotation sous forme d'au moins deux signaux logiques numériques à deux états traités par un étage électronique les codant par sommation pondérée des tensions de manière à créer un signal analogique dont la tension est toujours supérieure à un seuil prédéterminé en fonctionnement normal du capteur. Il est alors possible de transmettre la valeur de l'angle mesurée sur une unique connexion électrique reliant la sortie du capteur à un organe utilisateur du type calculateur, ladite connexion étant également utilisée par l'organe utilisateur pour envoyer un signal de demande de diagnostic du fonctionnement du capteur, et pour transmettre l'information en réponse entre le capteur et l'organe utilisateur. Ce procédé est caractérisé en ce qu'il comprend les étapes suivantes :
- abaissement de la tension de sortie du capteur sous le seuil minimal de fonctionnement normal suite à une demande de diagnostic émise par l'organe utilisateur ;
- détection par le capteur de l'abaissement de ladite tension de sortie ;
- transmission de cette information utilisée pour inhiber le fonctionnement normal et forcer les signaux logiques numériques à prendre des valeurs telles que le signal de sortie résultant est déterminé, attendu et contrôlable.

On va maintenant décrire l'invention plus en détail, en se référant aux figures disposées en annexe, pour lesquelles :
- La figure 1a est une vue de côté d'une fourche optique coopérant avec une roue à encoches ;
- La figure 1b est la vue de dessus correspondant à la vue précédente ;
- La figure 2 montre la forme des signaux émis par les éléments sensibles, ainsi que de signaux obtenus par traitement ;
- La figure 3 est un schéma synoptique simplifié du système; et
- La figure 4 représente le schéma électronique complet d'une solution possible de l'invention.

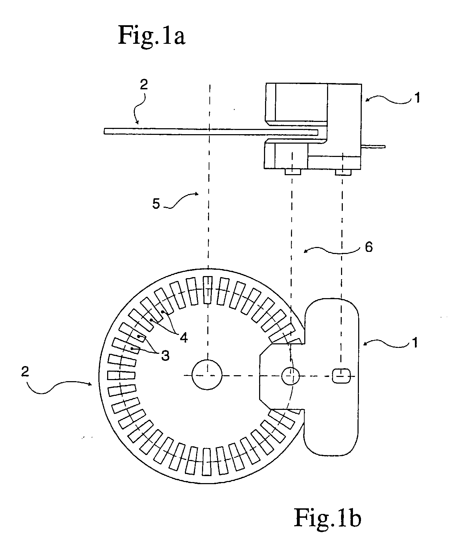

Le système montré en figure 1a et 1b comporte une fourche optique (1), dont les branches sont disposées de part et d'autre d'une roue (2) présentant des découpes (3) alternant avec des zones angulaires pleines (4), selon un motif périphérique régulier.

Cette roue (2) est solidaire d'un arbre (non représenté) tournant autour d'un axe (5). Les éléments sensibles sont placés dans les branches de la fourche optique (1), à raison de deux émetteurs et de deux récepteurs situés en regard les uns des autres, les émetteurs sur une branche et les récepteurs sur l'autre. Les axes optiques sont par exemple identifiés à l'axe référencé (6) et sont décalés de telle sorte que les signaux logiques émis par les récepteurs sont décalés de Π/2.

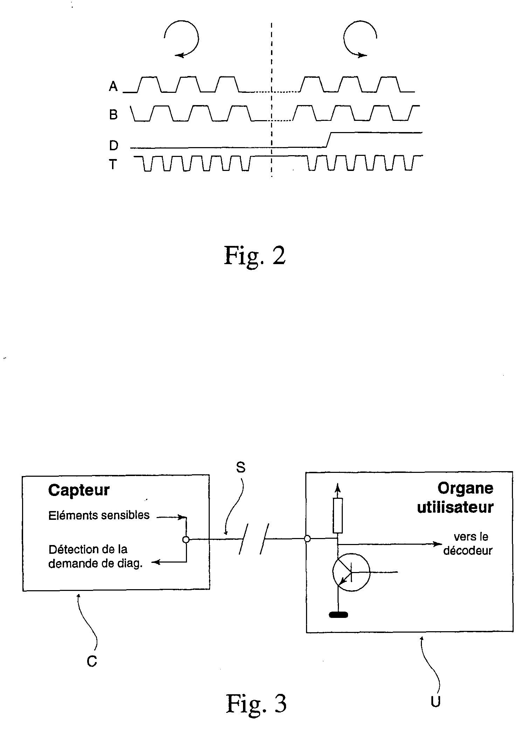

Lesdits signaux apparaissent en figure 2, référencés (A) et (B), le décalage d'un quart de période étant orienté en fonction du sens de rotation matérialisé par les flèches surplombant ce diagramme.

Les deux signaux suivants, référencés (D) et (T) résultent d'une reconstitution opérée par le calculateur, ou plus généralement par des circuits électroniques adaptés. Ainsi, le signal (T), utile pour connaître la vitesse de rotation, ainsi d'ailleurs que pour opérer un comptage permettant d'obtenir la valeur de l'angle parcouru, résulte d'un OU exclusif logique réalisé sur les signaux (A) et (B).

Le signal (D) indique le sens de rotation, et il peut être obtenu en comparant l'arrivée des fronts montants ou descendants des signaux (A) et (B).

Le schéma synoptique extrêmement simplifié présenté en figure 3 donne une vision des éléments de l'invention et de leur localisation par rapport à la ligne de connexion unique (S) véhiculant l'information. Le capteur (C), pris dans un sens large, contient les éléments sensibles, l'étage de codage et les circuits de détection et de mise en oeuvre de la demande de diagnostic.

L'organe utilisateur (U) contient le circuit destiné à abaisser la tension de seuil du signal (S), et peut comprendre d'autres circuits, tels que ceux de l'étage décodeur. Selon une alternative, ces circuits peuvent être placés au niveau du calculateur central, comme périphériques de l'unité centrale.

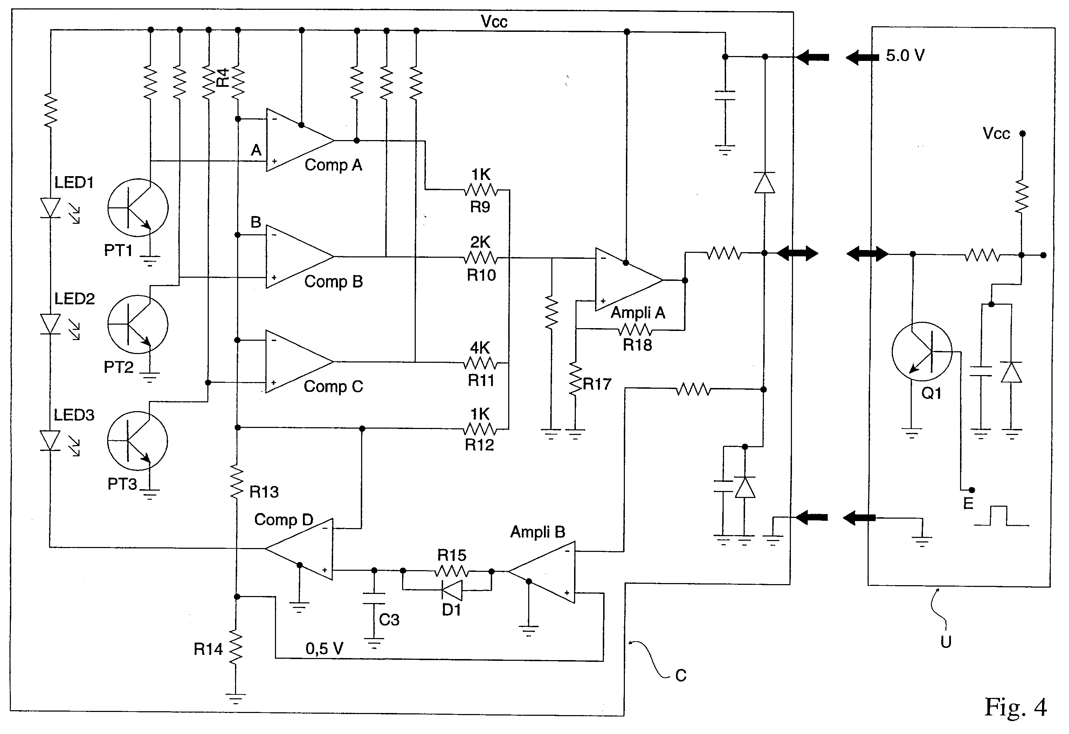

La figure 4 représente le schéma électronique détaillé d'un circuit de mise en oeuvre possible de l'invention.

Dans la réalisation présentée, un troisième élément sensible vient compléter ceux dont on a déjà évoqué la présence et la fonction. Cet élément additionnel peut réaliser des fonctions annexes qui ne sont pas du domaine de l'invention. II y a donc trois signaux logiques à coder sur un seul fil (S).

Les couples émetteurs récepteurs sont constitués de trois diodes électroluminescentes (LED1, LED2, LED3) couplées à trois phototransistors (PT1, PT2, PT3). La tension issue des phototransistors formant notamment les signaux A et B est mise en forme par les trois comparateurs (Comp A, Comp B, Comp C), qui comparent les tensions lues sur les collecteurs des phototransistors à une tension fixe obtenue par le pont de résistance (R4, R13, R14). Les résistances (R9, R10, R11), en coopération avec l'amplificateur opérationnel (Ampli A), effectuent une somme des tensions obtenues sur les sorties à collecteur ouvert des comparateurs (Comp A, Comp B, Comp C).

La résistance (R12) ajoute une tension de 0,5 V obtenue via le même pont de résistances (R4, R13, R14), et participe à l'obtention du seuil minimal de tension en sortie (S).

Les résistances précitées (R9, R10, R11) participent à la pondération des valeurs des tensions, et le gain de l'amplificateur (Ampli A) est réglé par les résistances (R17, R18), de telle sorte que la tension de sortie en (S) soit comprise entre 0,5 V et 5,0 V. Ainsi, le capteur (C) transmet bien sur une unique ligne (S) trois informations différentes, la tension minimale en fonctionnement normal étant toujours 0,5 V.

A ces informations, il faut encore pouvoir faire transiter sur la ligne (S) la demande de diagnostic émanant de l'utilisateur (U), ainsi que la réponse à cette demande.

La solution préconisée dans le cadre de l'invention est, comme on l'a vu, la suivante : le signal de sortie ne pouvant en principe pas descendre sous le seuil de 0,5 V, l'organe utilisateur a été conçu pour pouvoir abaisser lui-même la tension de la ligne sous la valeur de 0,5 V, afin de générer une condition anormale, mais maîtrisée, sur la ligne.

Le capteur (C) est ensuite configuré de telle sorte qu'il puisse interpréter cette condition anormale comme une demande de diagnostic, qu'il détecte et traite en envoyant une réponse facilement compréhensible par le calculateur, identifié sur la figure 4 à l'organe utilisateur (U).

Pour tirer la ligne en-dessous de la valeur de tension minimale normale de
0,5 V, le circuit utilisé est un simple transistor (Q1) dont le collecteur est connecté à la ligne (S), l'émetteur à la masse, et la base à l'organe émettant la demande de diagnostic, en l'occurrence une simple impulsion en (E), durant quelques millisecondes.

Lorsque la tension de la ligne (S) est portée à la tension de la masse puisque le transistor devient passant du fait du changement d'état de sa base, l'amplificateur (Ampli B), monté en comparateur de tension, voit sa sortie passer instantanément à l'état haut.

Le condensateur (C3) se charge alors par l'intermédiaire de la diode (D1), alors qu'il était jusqu'alors déchargé, puisque connecté à la sortie du comparateur (Ampli B), à l'état normalement bas, via la résistance (R15).

La sortie à collecteur ouvert du comparateur (Comp D) change d'état et les diodes électroluminescentes (LED1, LED2, LED3) cessent aussitôt d'être alimentées. Leur extinction provoque l'émission d'un signal bas identique sur les sorties des phototransistors (PT1, PT2, PT3).

Après la fin de la mise à la masse de la ligne (S) par le transistor Q1, les diodes (LED1, LED2, LED3) restent éteintes pendant la durée de la décharge du condensateur C3 dans l'amplificateur (Ampli B) via la résistance (R15). La durée de cette décharge est de quelques millisecondes.

Aussitôt que le transistor Q1 est redevenu bloqué, la ligne (S) reprend sa configuration normale : elle peut donc transmettre l'état des phototransistors (PT1, PT2, PT3), qui est connu puisque toutes les diodes sont éteintes pendant la durée de décharge du condensateur C3.

Le calculateur connaît donc la valeur du signal qu'il doit recevoir, et la compare à celle qu'il reçoit effectivement. S'il constate une différence, il en déduit qu'une défaillance s'est produite, et met en oeuvre une stratégie appropriée.

La circuiterie simple utilisée par l'invention permet donc un diagnostic de la plupart des composants de la chaîne de mesure, sans apport d'intelligence ajoutée, comme par exemple un micro-contrôleur. Ceci se fait au surplus sans ajouter de fils supplémentaires à l'unique connexion (S) utilisée à l'origine pour véhiculer les signaux logiques codés.

Le circuit décrit dans les lignes qui précédent est un exemple possible, qui ne doit cependant pas être considéré comme limitatif de l'invention, laquelle est définie dans les revendications qui suivent.

## Revendications

1. Système de diagnostic du fonctionnement d'un capteur d'angle (C) fournissant la mesure de l'angle d'un organe en rotation (2) sous forme d'au moins deux signaux logiques (A, B) à deux états traités par un étage électronique les codant par sommation pondérée des tensions de manière à créer un signal analogique dont la tension est toujours supérieure à un seuil prédéterminé en fonctionnement normal du capteur (C), de façon à transmettre la valeur de l'angle mesuré sur une unique connexion électrique (S) reliant la sortie du capteur (C) à un organe utilisateur (U) du type calculateur, ladite connexion (S) étant également utilisée par l'organe utilisateur (U) pour envoyer un signal de demande de diagnostic du fonctionnement du capteur (C), et pour transmettre l'information en réponse entre le capteur (C) et l'organe utilisateur (U), caractérisé en ce qu'il comporte :
- des moyens électroniques pour abaisser la tension du signal de sortie du capteur (C) sous ledit seuil prédéterminé en réponse à une demande de diagnostic émise par l'organe utilisateur (U) ; et
- des moyens électroniques de détection de l'abaissement dudit signal de sortie du capteur (C), reliés à des moyens électroniques de forcer les signaux logiques à deux états, chacun à une valeur telle que le signal de sortie résultant est déterminé et contrôlable par l'organe utilisateur (U).

2. Système de diagnostic selon la revendication 1, caractérisé en ce que les moyens électroniques pour abaisser la tension du signal de sortie du capteur (C) sous ledit seuil de tension prédéterminé sont constitués par un transistor (Q1) dont la base est reliée à l'organe utilisateur (U) qui y envoie l'impulsion (E) de demande de diagnostic, dont le collecteur est relié à la sortie (S) du capteur (C), et dont l'émetteur est connecté à la masse.

3. Système de diagnostic selon l'une des revendications 1 et 2, caractérisé en ce que les moyens électroniques de détection de l'abaissement de la tension en sortie du capteur (C) sont constitués d'un amplificateur opérationnel (Ampli B) monté en comparateur de tension dont l'entrée négative est reliée à ladite sortie (S) du capteur (C) alors que l'entrée positive est reliée à un pont de résistance (R4, R13, R14) calibrant son seuil de changement d'état en sortie, laquelle est reliée aux moyens électroniques de forcer les signaux logiques à deux états à des valeurs prédéterminées.

4. Système de diagnostic selon l'une quelconque des revendications précédentes, caractérisé en ce que lesdits signaux logiques à deux états sont obtenus au moyen de couples émetteurs récepteurs optiques (LED1, PT1, ; LED2, PT2 ; LED3, PT3) dont les émetteurs émettent de la lumière lorsqu'ils sont sous tension, ladite lumière étant captée par les récepteurs selon la position en rotation de l'organe rotatif (2).

5. Système de diagnostic selon la revendication précédente, caractérisé en ce que les couples émetteurs - récepteurs sont constitués de diodes électroluminescentes (LED1, LED2, LED3) et de phototransistors (PT1, PT2, PT3).

6. Système de diagnostic selon l'une des revendications 4 et 5, caractérisé en ce que les moyens électroniques pour forcer les signaux logiques à deux états à des valeurs prédéterminées consistent en un comparateur (Comp D) dont la sortie à collecteur ouvert change d'état et passe à l'état haut lorsque lesdits moyens de détection (Ampli B) signalent une demande de diagnostic, ladite sortie étant reliée auxdits émetteurs (LED1, LED2, LED3) dont l'autre pôle est à la tension d'alimentation, alors que l'entrée positive dudit comparateur (Comp D) est reliée à la sortie des moyens de détection (Ampli B), l'entrée négative étant reliée à un pont de résistance R4, R13, R14).

7. Système de diagnostic selon la revendication 6, caractérisé en ce que l'entrée positive du comparateur (Comp D) change d'état par chargement d'un condensateur (C3) relié à la sortie des moyens de détection (Ampli B) via une diode (D1) en parallèle avec une résistance (R15), la décharge dudit condensateur (C3) déterminant la durée de maintien à l'état haut de la sortie dudit comparateur (Comp D).

8. Procédé d'établissement du diagnostic de fonctionnement d'un capteur d'angle (C) fournissant la mesure de l'angle d'un organe en rotation sous forme d'au moins deux signaux logiques à deux états traités par un étage électronique les codant par sommation pondérée des tensions, de manière à créer un signal analogique dont la tension est toujours supérieure à un seuil prédéterminé en fonctionnement normal du capteur (C), de façon à transmettre la valeur de l'angle mesurée sur une unique connexion électrique (S) reliant la sortie du capteur (C) à un organe utilisateur (U) du type calculateur, ladite connexion (S) étant également utilisée par l'organe utilisateur (U) pour envoyer un signal de demande de diagnostic du fonctionnement du capteur (C), et pour transmettre l'information en réponse entre le capteur (C) et l'organe utilisateur (U), caractérisé en ce qu'il comprend les étapes suivantes :
- abaissement de la tension de sortie du capteur (C) sous le seuil minimal de fonctionnement normal suite à une demande de diagnostic émise par l'organe utilisateur (U) ;
- détection par le capteur de l'abaissement de ladite tension de sortie ;
- transmission de cette information utilisée pour inhiber le fonctionnement normal et forcer les signaux logiques à deux états à prendre des valeurs telles que le signal de sortie résultant est déterminé, attendu et contrôlable.
